# EUROPEAN PATENT SPECIFICATION

(11) **EP 3 069 617 B1**
(45) Date of publication and mention of the grant of the patent: **22.05.2019**
(21) Application number: 16160941.7
(22) Date of filing: 17.03.2016
(51) Int. Cl.: A23L 13/50, A23L 13/60

(54) **METHOD FOR PRODUCING A PRE-BOILED CHICKEN BURGER AND THUS PRODUCED CHICKEN BURGER**
VERFAHREN ZUR HERSTELLUNG EINEN GEKOCHTEN HÄNCHENBURGER UND DADURCH HERGESTELLTEN HÄNCHENBURGER
PROCÉDÉ POUR LA PRODUCTION DE BURGER AU POULET BOUILLIE ET BURGER AU POULET AINSI PRODUIT

(30) Priority: 20.03.2015 BE 201505171
(43) Date of publication of application: 21.09.2016
(73) Proprietor: Conings, Bert, 4651 Battice (BE)
(72) Inventor: Conings, Bert, 4651 Battice (BE)
(74) Representative: Gevers Patents

(56) References cited:
- WO-A1-2008/124629
- US-A- 5 811 146
- Anonymous: "GNPD - Chicken Burgers", , 1 September 2014 (2014-09-01), XP055229205, Retrieved from the Internet: URL:http://www.gnpd.com/sinatra/recordpage /2640881/ [retrieved on 2015-11-18]
- Anonymous: "GNPD - Cheese, Beef and Chicken Burger Square", , 1 June 2012 (2012-06-01), XP055229269, Retrieved from the Internet: URL:http://www.gnpd.com/sinatra/recordpage /1811279/from_search/eFdguGHnzf/ [retrieved on 2015-11-18]

## Description

The present invention concerns a method for the production of a pre-boiled chicken burger, in which method meat dough is prepared by combining, cutting up and mixing at least chicken meat, broiler skins, starch, water, and one or more phosphate compounds, in particular by means of a cutter, of which meat dough a raw chicken burger is formed that is pre-boiled in water. For the purpose of storage of the chicken burger, it is subsequently frozen.

In the production of such chicken burgers, it was determined that the volume of the chicken burgers increases slightly during boiling and thereby changes shape. In practice, chicken burgers which are manufactured from a meat dough usually have a more or less oval shape.

The disadvantage of an oval shape is that, when it is desired to lay the chicken burger between a round bun, this chicken burger either protrudes on two sides or it is so small that it does not completely cover both halves of the bun. With hamburgers that are manufactured from beef rather than from chicken meat, it is common practice to make these round-shaped. The difference between chicken burgers and hamburgers is that hamburgers are not pre-boiled in water but are pre-baked in oil. Therefore, they retain their round shape. When round-shaped chicken burgers would be pre-boiled in water, they would lose their round shape and they would become oval-shaped.

With hamburgers, it is also known to make these into a square shape. Raw square-shaped hamburgers which are immediately baked in oil or fat, also retain their square shape. With the pre-boiled chicken burgers, however, the problem presents itself that, when these chicken burgers are formed into a square, they lose their square shape during the boiling and baking process and become more rectangular. The disadvantage of such rectangular-shaped chicken burgers is that they do not fit between a round-shaped bun, nor between a square-shaped bun.

WO2008124629 describes a process for making pre-cooked chicken patties which can have any desired shape.

US5811146 describes a method for producing flat processed meat products, wherein the protein can be of poultry origin and which can have a square or rectangle shape.

The invention therefore has the object of providing a new method which allows production of pre-boiled chicken burgers which are almost square-shaped after baking.

To this end, the method according to the present invention is characterized in that the raw chicken burger is formed in a mould cavity which is essentially beam-shaped and which has a length L, a width B and a thickness D, in which the ratio between the length L and the width B is chosen within a range of between 1.1 and 1.3 such that the produced, pre-boiled chicken burger is almost square-shaped and has a circumferential rectangle having a length L" and a width B", the ratio between said length L" and said width B" being smaller than 1.10.

According to the invention, it was surprisingly found that, when starting from a rectangular raw chicken burger, the ratio between the length and the width thereof greatly reduces during pre-boiling, notwith-standing that only a limited increase in volume occurs during boiling, and in such a way that after a correct choice of the initial length/width ratio after the pre-boiling, and eventually also after baking, an essentially square-shaped chicken burger can be obtained. This phenomenon is all the more surprising since it does not occur with hamburgers which are made from beef, and which are pre-baked in oil instead of being pre-boiled in water.

In a preferred embodiment of the method according to the invention, in the preparation of said meat dough as meat almost exclusively said chicken meat is used or, if additionally one or more other types of meat are used, then these other types of meat are used in an amount up to a maximum of 50 %, preferably up to a maximum of 30 %, and more preferably up to a maximum of 10 % of the applied quantity of chicken meat, wherein preferably almost exclusively chicken meat is used.

In a further preferred embodiment of the method according to the invention, said chicken meat contains mechanically separated meat and preferably consists for at least 50 % and more preferably at least 75 % out of mechanically separated meat, wherein preferably almost exclusively use is made of mechanically separated meat as said chicken meat.

Notwithstanding the fact that such mechanically separated meat consists of very fine particles, and according to some should not be referred to as chicken meat, but may only be referred to as animal protein if it is smaller than a certain value, in the present text, this should be considered as chicken meat, independent of the size of the particles.

In a particular embodiment of the method according to the invention, the ratio between the length L and the width B of the mould cavity in which the raw chicken burger is formed, ranges between 1.15 and 1.25.

As indicated above, the ratio of the length to the width of the chicken burger reduces during the pre-boiling to such an extent that by starting from of a rectangular chicken burger after boiling an essentially square-shaped chicken burger can be obtained.

Further advantages and particularities of the invention will become apparent from the following description of some preferred embodiments of the method and the thus obtained chicken burger according to the invention. This description is however only given by way of example and is not intended to limit the scope of protection, as defined by the claims. The reference numerals given in the description relate to the annexed drawings wherein:
Figure 1 shows a perspective view of the mould plate in which the raw chicken burger, made of compacted meat dough, is formed according to the invention;
Figure 2A schematically shows a top view of the raw chicken burger which was formed under pressure in the mould plate, indicated in Figure 1;
Figures 2B and 2C schematically show respectively a longitudinal section and a cross-section through the raw chicken burger and this along the lines IIB-IIB and IIC-IIC, indicated in Figure 2A;
Figure 3A schematically shows a top view of the chicken burger of Figure 2 after it has been boiled;
Figures 3B and 3C schematically show respectively a longitudinal section and a cross-section through the boiled chicken burger and this along the lines IIIB-IIIB and IIIC-IIIC, indicated in Figure 3A;
Figure 4A schematically shows a top view of the chicken burger in Figures 3A-C after it has been baked; and
Figures 4B and 4C schematically show respectively a longitudinal section and a cross-section through the baked chicken burger and this along the lines IVB-IVB and IVC-IVC, indicated in Figure 4A;

The invention generally relates to a method for producing a pre-boiled chicken burger which is essentially square-shaped. The advantage of such a square-shaped chicken burger is that it looks good when it is presented on a plate or that it fits between a square-shaped bun. For elongated buns, it can easily be cut in two such that the bun can be filled with the two rectangular parts. It also has advantages for round buns. The four corners of the chicken burger only protrude over a small distance, such that the chicken burger is visible and the consumer will feel like eating this chicken burger.

For the production of the chicken burger, first a meat dough 1 is prepared by combining, cutting up and mixing at least chicken meat, broiler skins, starch, water, and one or more phosphate compounds, in particular by means of a cutter which comprises at least one, but preferably multiple rotating cutter blades. In addition to these basic ingredients other ingredients may be added. These usually further contain, for example breadcrumbs, a blend of spices and flavouring substances. Also, in particular, wheat fibre can be applied. Other products, in particular, vegetable products, may still be mixed in with the meat dough such as for example onions which are preferably dehydrated.

As chicken meat, larger pieces of meat can be used which are then finely cut up. For making chicken burgers, however, it is preferred to use mechanically separated meat of chicken. This is achieved by removing the last processable meat residues from bones of boned chicken carcasses with a high-pressure machine. When these are very small particles, these may no longer be called meat according to certain regulations, and then should merely be declared as animal protein, but in the present specification, this still falls within the term chicken meat. In the method according to the invention, the chicken meat therefore preferably contains mechanically separated chicken meat and it consists preferably for at least 50 %, and more preferably at least 75 % of mechanically separated meat. These percentages, and also the other percentages in the present text, are expressed in percent wet weight per wet weight unless otherwise indicated. In practice, preferably almost exclusively mechanically separated meat is used for the said chicken meat.

In addition to the chicken meat even smaller amounts of other types of meat can be used in the chicken burger according to the present invention. This could be meat obtained from other poultry such as turkey or ostrich, but further also pork or beef. Preferably, the quantity of the other type or types of meat is up to a maximum 50 %, more preferably up to a maximum of 30 %, and most preferably up to a maximum 10 % of the applied quantity of chicken meat. Notwithstanding that next to the chicken meat other types of meats can be used, the resulting burger is still covered by the term chicken burger. Preferably, however, almost exclusive use is made of chicken meat as meat for the production of the chicken burger according to the present invention.

Water and at least one phosphate compound is added to the meat. This phosphate compound is intended to improve the water and fat binding properties of the meat dough. In particular, it promotes the conversion of actomyosin in the meat to myosin. Myosin is a protein which has favourable properties with respect to the water and fat binding and with respect to the adhesion of the meat particles. It also turns out to be a good emulsifier. The phosphate compound allows in a sufficient manner the release of this protein from the muscle meat.

As phosphate compound, for example, use can be made of sodium or potassium phosphates. This may be orthophosphates or di-, tri- and polyphosphates. Preferably, they are alkaline phosphates that increase the pH of the meat since these improve the water binding properties of the meat and reduce the boiling losses during heating. Alkaline phosphates are, for example, sodium and potassium polyphosphates and phosphates having the following chemical formulas Na₃PO₄, K₃PO₄, Na₄P₂O₇, K₄P₂O₇, Na₅P₃O₁₀, Na₅P₃O₁₀. The phosphate compound or compounds are preferably added in an amount such that the meat dough has a phosphate content, expressed in gram P₂O₅ per kilogram of meat dough, of 5 to 8 g/kg and preferably from 6 to 8 g/kg.

Preferably the chicken meat is first treated with the phosphate compound before, in particular, the broiler skins and the starch are added to optimally form and release the myosin in the meat. For this purpose, the mixture of the chicken meat and the phosphate compound and a portion of the water can be mixed and cut up in a cutter. Preferably, also all flavouring substances are added at this stage such that these can optimally penetrate into the meat fraction.

The broiler skins are mainly added to increase the fat content of the chicken burgers. Under broiler skins, as is customary in the jargon, also the skins of older chickens should be understood. The mechanically separated meat of chicken that is commercially available, in itself already contains some finely sliced broiler skins. In the preparation of the meat dough in the process according to the invention, preferably at least 40 %, more preferably at least 50 %, and most preferably at least 55 % chicken meat and broiler skins is used, expressed as a percentage on the total weight of the meat dough. Optionally, other animal fat may be added but preferably only broiler skins are used for increasing the fat content of the chicken burger.

The broiler skins are preferably added to the chicken meat after it has been cut up and mixed together with the phosphate compound or compounds. The cutting up and the mixing of the chicken meat with the phosphate compound is preferably carried out in a cutter to which then also the broiler skins are added. In this phase, a further portion of the water can be added and preferably also the other ingredients which withdraw no or only little water from the mixture such as hydrated onions, if these are applied, and the seasoning mixture. If hydrated onions are applied, preferably these are applied in an amount of 0.5 to 2 % based on the total weight of the meat dough. The seasoning mixture is for example used in an amount of 1 to 10 %, preferably 3 to 7 % of the total weight of the meat dough.

Before adding substances which make the mixture dryer such as the starch, the mixture containing the broiler skins is further cut up and mixed, in particular in the cutter. Here, a part of the fat from the broiler skins is released and emulsified in the aqueous phase. As already indicated above, the released myosin helps to emulsify these fats.

In a subsequent phase, the substances that make the mixture dryer are then added, wherein a final part of the water can be added in order to give the desired consistency to the meat dough. These substances comprise at least starch, wherein as starch, preferably wheat starch is used. Preferably, bread crumbs and/or wheat fibres are further added, more preferably both of them are added. These last products also absorb water and also deliver a positive contribution to the structure of the meat dough. The entire mixture is then preferably further cut up, mixed, and emulsified, in particular in the cutter.

The total amount of water that is added in the various stages, is preferably at least 7 %, more preferably at least 10 %, and most preferably at least 13 %, expressed as a percentage of the total weight of the meat dough. The maximum amount of water that is added, is preferably less than 25 %, and more preferably less than 20 %.

In the preparation of the meat dough, preferably use is made of cooled ingredients, wherein in particular frozen chicken meat are used as a starting material, such that that after the preparation of the meat dough, this dough has as low a temperature as possible, for example a temperature of at most 20 °C , or preferably a temperature of at most 14 °C. After formation of the raw chicken burger, it should be pre-boiled in water of which the temperature is preferably at least 60 °C, more preferably at least 65 °C higher than the temperature of the raw chicken burger that is disposed therein. In this way, the raw chicken burger heats up quickly on the exterior in such a way as to quickly form a "crust" which closes off the interior of the chicken burger. For the sake of bacteriological reasons, the chicken burger is boiled until it is completely heated up to a temperature of at least 70 °C, preferably to a temperature of at least 75 °C, i.e. until the core temperature of the chicken burger has risen to this temperature. Preferably, the chicken burger is pre-boiled in water with a temperature comprised between 80 and 90 °C, more preferably at a temperature of about 85 °C. The boiling of the raw chicken burger takes, for example, about 15 minutes. Generally, it takes less than 60 minutes to boil, more in particular less than 45 minutes and usually less than 30 minutes but more than 5 minutes and in particular more than 10 minutes.

After boiling the chicken burger is preferably cooled as quickly as possible, for example in a rapid cooling tunnel. During this cooling process the internal temperature of the chicken burger preferably decreases to a temperature lower than 10 °C, in particular to a temperature of about 8 °C. Such a cooling process takes for example about half an hour. The cooled chicken burger can then be wrapped and consequentially be frozen.

Before use, the chicken burger should then be baked. This is done in fat or oil at a high temperature, in particular at a temperature higher than 140 °C. The baking usually takes place in a cauldron filled with oil or grease (in other words, to fry the chicken burger) or in a pan or on a griddle or grill.

In the aforementioned method for producing the chicken burger, a volume change occurs during the boiling of the chicken burger. It was found that the volume of the chicken burger and especially the thickness thereof increases during this process. Surprisingly, the width of the chicken burger remains essentially the same while the length is greatly reduced and such that, with the right selection of the ratio between the length and the width of the chicken burger it becomes essentially square-shaped after pre-boiling. During subsequent baking, or in particular frying, another change in volume occurs, yet the chicken burger remains essentially square-shaped during baking. The objective of the invention is to be able to manufacture chicken burgers that are essentially square-shaped with the method as described above. With a essentially square-shaped chicken burger is in particular understood to mean that in a top view of the chicken burger, the ratio between the length and the width of the circumferential rectangle is smaller than 1.10 and in particular smaller than 1.05.

According to the invention, it was found that when initially the raw chicken burger is formed in a mould cavity 2 which has the shape of a substantially beam-shaped body having a length L, a width B and a thickness D, the ratio between the length L and the width B is chosen such that the produced chicken burger is essentially square-shaped after pre-boiling. Depending on the volume changes of the chicken burger, or in other words depending on the composition of the meat dough, the required ratio between the length L and the width B of the mould cavity 2 is therefore usually comprised between 1.1 and 1.3 and, more in particular between 1.15 and 1.25. The correct value of the ratio between the length L and the width B may be determined experimentally.

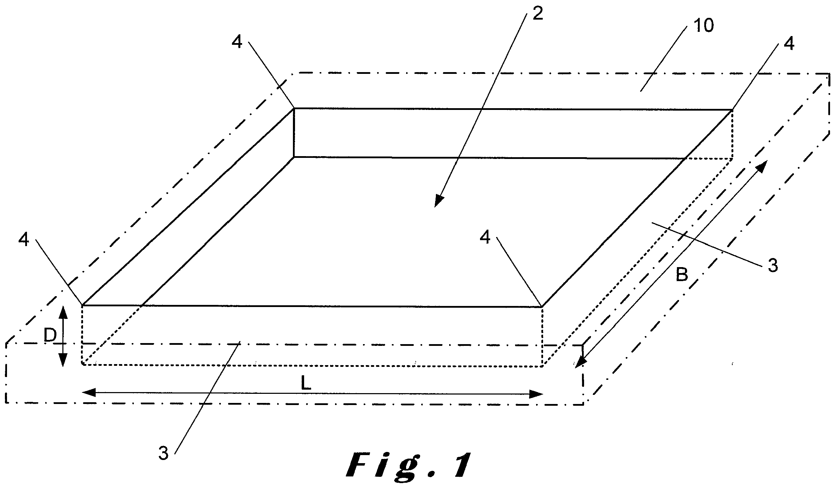

Figure 1 shows a perspective view of a mould plate 10 containing the mould cavity 2 in which the chicken burger is formed. This is done by compressing the meat dough 1 under pressure in the mould cavity 2, for example under a pressure comprised between 0.5 and 1 MPa. The mould cavity 2 has four side surfaces 3 which mutually form four right angled 4 shapes or corners which may be rounded off. In the case of rounded corners 4 the radius of curvature of said angles is preferably smaller than 15 mm, more preferably smaller than 10 mm, and in particular smaller than 5 mm. The length L of the mould cavity 2 is in particular comprised between 70 and 150 mm, the width B between 60 and 130 mm and the thickness D between 5 and 25 mm.

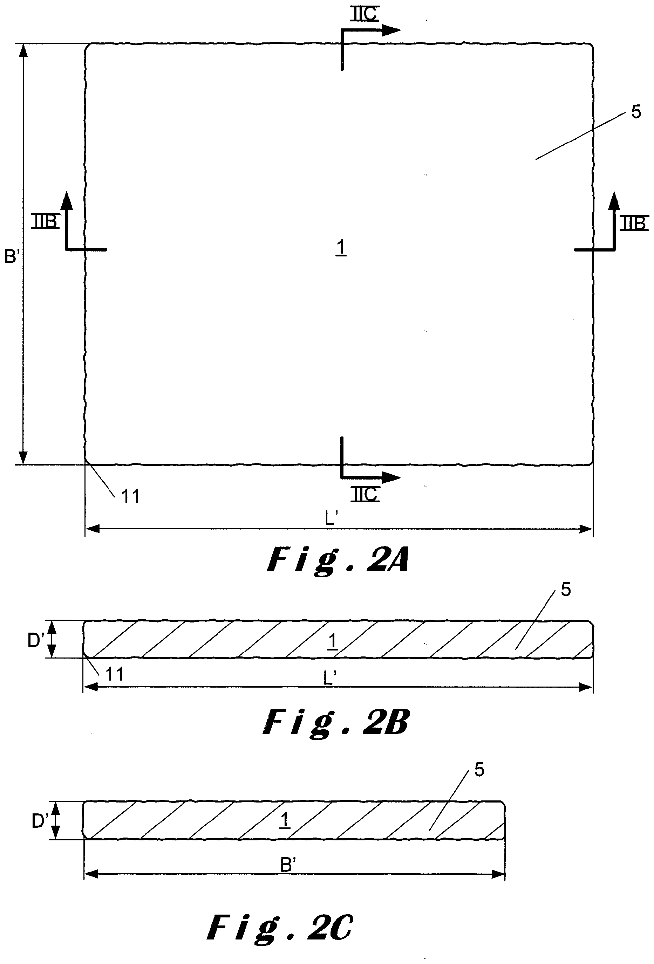

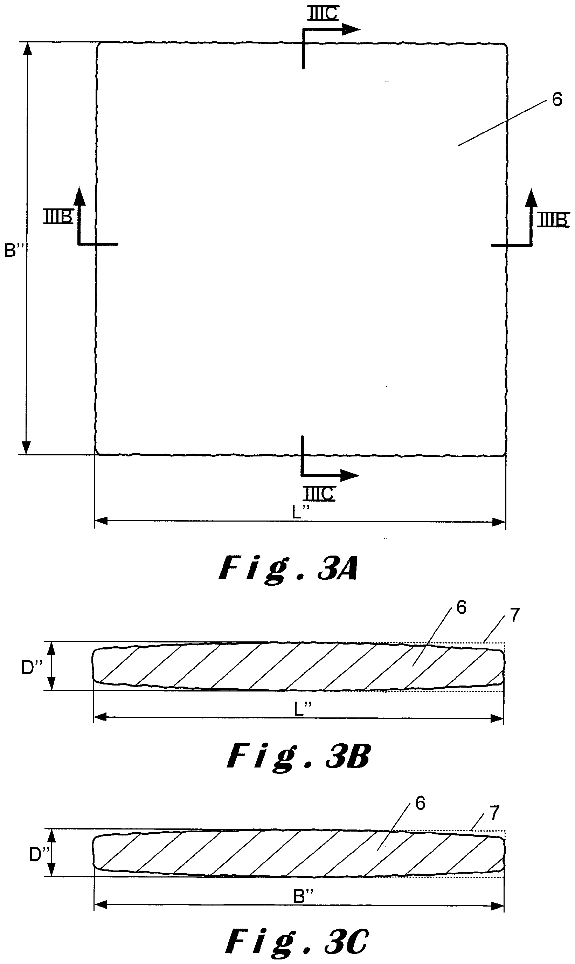

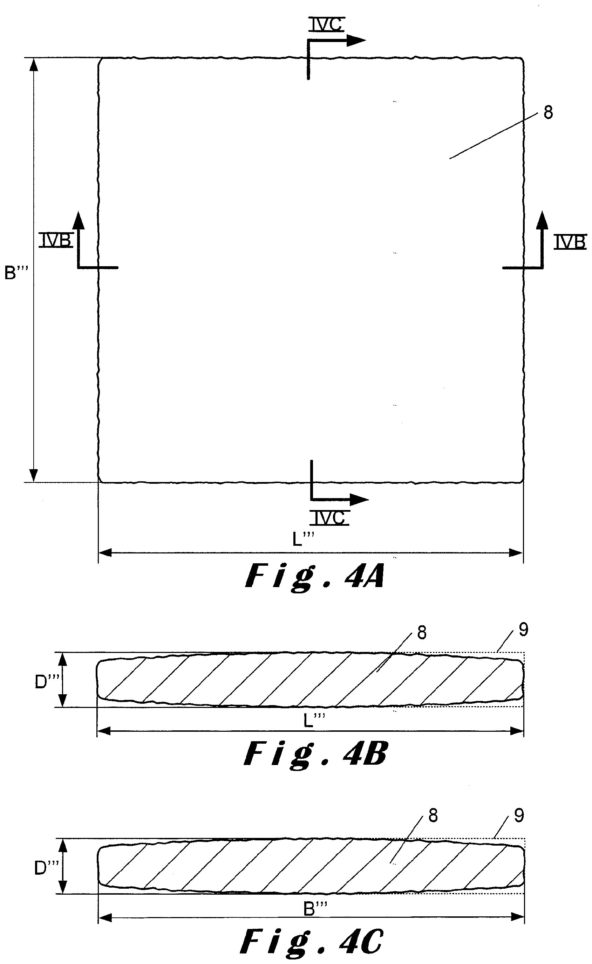

During demoulding the volume of the chicken burger increases, in particular both the length and the width thereof, since the compressed meat dough relaxes somewhat again. The formed, raw chicken burger 5 is schematically shown in Figures 2A-C, wherein the length of the raw chicken burger was designated with L', the width with B' and the thickness with D'. The pre-boiled chicken burger 6 is schematically shown in Figures 3A-C. As indicated these pre-boiled chicken burger 6 has a length L" which is essentially equal to its width B", which in particular is due the fact that during the boiling, the length of the chicken burger was greatly decreased. The thickness D' of the chicken burger has however increased markedly during pre-boiling. During the subsequent baking (frying) of the chicken burger, the thickness increases even further while both the length and the width also increase slightly. In Figures 4A-C the baked chicken burger 8 is shown with an indication of the length L'", the width B'" and the thickness D"'.

The length, the width and the thickness of the chicken burger are determined as being the length, the width and the thickness of the circumferential beam to the chicken burger, hence of the beam of which each of the surfaces are tangent to the sides of the chicken burger.

### Example

For the preparation of 100 kg of meat dough, use was made of about 34 kg of mechanically separated meat of chicken, 29 kg of broiler skins, 11 kg of bread crumbs, 0.4 kg of wheat fibres, 4 kg of wheat starch, 5 kg of seasoning mixture, 1.2 kg of dehydrated onions, 0.7 kg of sodium phosphate, 14 litres of water and 0.7 litres of aroma.

The deep-frozen mechanically separated meat was cut up in an industrial cutter with seven cutter blades, after which a first quantity of water was added together with the sodium phosphate and the aroma solution. The whole was then cut up in the cutter and mixed. In a next step, the broiler skins, dehydrated onions and seasoning mixture were added after which everything was again properly mixed and cut up. In a final phase the breadcrumbs, wheat starch, the wheat fibre and a final part of the water were added and the whole was further cut up, mixed and emulsified. Because the starting ingredients were all cold, the temperature did not rise higher than 14 ° C.

Next, the meat dough 1 was ejected from the cutter and inserted into the moulding machine. This moulding machine contained the mould plate 10 with therein the mould cavities 2 with a length L of 130 mm, a width B of 105 mm and a thickness D of 11.6 mm (the thickness D is the thickness or in other words the height of the mould cavity when the chicken burger is compressed therein). In the mould cavities 2 the meat dough 1 was compressed to raw chicken burgers 5 under a pressure of 0.8 MPa. After removing the raw chicken burgers 5 from the mould cavity, they had a length L' of 145 mm, a width B' of 120 mm and a thickness D' of 11 mm. These dimensions refer to the dimensions of the circumferential beam 11 of the raw chicken burgers 5 such as was schematically shown in Figures 2A to 2C. The raw chicken burgers 5 were immediately boiled in water at 85 ° C for 15 minutes and were then rapidly cooled in a cooling tunnel for 28 minutes. After boiling, the core temperature of the chicken burgers was at least 79 °C and after the cooling about 8 °C. The chicken burgers were then packaged and frozen.

The shape and dimensions of the boiled chicken burgers 6 is schematically shown in Figures 3A to 3C. The circumferential beam 7 of the boiled chicken burgers 6 has a length L" of 120 mm, a width B" of 120 mm and a thickness D' of 14 mm. By boiling the volume of the boiled chicken burgers had therefore increased somewhat. However, the length of the chicken burgers is decreased to such an extent that the pre-boiled chicken burgers were essentially square-shaped. During the cooling and freezing of chicken burgers 6 almost no volume changes occurred such that the chicken burgers remained square-shaped.

Figures 4A to 4B show the shape and the dimensions of the chicken burgers 8 as they were obtained after frying (baking). The circumferential beam 9 of the baked chicken burgers 8 has a length L'" of 124 mm, a width B'" of 124 mm and a thickness D'" of 16 mm. By frying the volume of the chicken burgers was therefore significantly increased, more in particular with approximately 22 %. Notwithstanding this significant increase in volume, the chicken burger however maintains the square shape.

From the previous description, it will be apparent that the scope of the invention is not limited to the embodiments described above.

In particular it is, for example, possible to apply a coating onto the raw chicken burgers, for example, a crumble, which is boiled and baked also but which by itself has no effect on the volume changes of the chicken burger or in any case is too thin to have noticeable effects.

## Claims

1. Method for the production of a pre-boiled chicken burger (6), in which method meat dough (1) is prepared by combining, cutting up and mixing at least chicken meat, broiler skins, starch, water, and one or more phosphate compounds, in particular by means of a cutter, from which meat dough a raw chicken burger (5) is formed that is pre-boiled in water,
**characterized in that**
said raw chicken burger (5) is formed in a mould cavity (2) which is essentially beam-shaped and which has a length L, a width B and a thickness D, wherein the ratio between the length L and the width B is chosen within a range of between 1.1 and 1.3 such that the produced chicken burger (6) is essentially square-shaped and has a circumferential rectangle having a length L" and a width B", the ratio between said length L" and said width B" being smaller than 1.10.

2. Method according to claim 1, **characterized in that** almost exclusively said chicken meat is used in the preparation of said meat dough or, if additionally one or more other types of meat are used, these other types of meat are used in an amount up to a maximum of 50 %, preferably up to a maximum of 30 %, and more preferably up to a maximum of 10 % of the applied quantity of chicken meat, wherein preferably almost exclusively chicken meat is used.

3. Method according to claim 1 or 2, **characterized in that** said chicken meat contains mechanically separated meat and preferably consists for at least 50 % and more preferably at least 75 % of mechanically separated meat, wherein preferably almost exclusively use is made of mechanically separated meat as said chicken meat.

4. Method according to any one of the claims 1 to 3, **characterized in that** the raw chicken burger is boiled at least until it is fully heated up to a temperature of at least 70 °C, preferably to a temperature of at least 75 °C.

5. Method according to any one of the claims 1 to 4, **characterized in that** the water in which the raw chicken burger is boiled, has a temperature which is at least 60 °C, preferably at least 65 °C, higher than the temperature of the raw chicken burger.

6. Method according to any one of the claims 1 to 5, **characterized in that**, in the preparation of said meat dough, at least 7 %, preferably at least 10 %, and most preferably at least 13 % of water is used, expressed as a percentage of the total weight of the meat dough.

7. Method according to any one of the claims 1 to 6, **characterized in that**, in the preparation of said meat dough, at least 40 %, preferably at least 50 %, and most preferably at least 55 % of chicken meat and broiler skins is used, expressed as a percentage of the total weight of the meat dough.

8. Method according to any one of the claims 1 to 7, **characterized in that** said phosphate compounds are added in order to increase the content of phosphates in the meat dough, expressed in gram P₂O₅ per kilogram of meat dough, to a value between 5 and 8 g/kg, preferably between 6 and 8 g/kg.

9. Method according to any one of the claims 1 to 8, **characterized in that** wheat starch is used as said starch.

10. Method according to any one of the claims 1 to 9, **characterized in that** further bread crumbs and/or wheat fibres are used for the preparation of said meat dough.

11. Method according to any one of the claims 1 to 10, **characterized in that** the ratio between the length L and the width B of the mould cavity (2) is comprised between 1.15 and 1.25.

12. Method according to any one of the claims 1 to 11, **characterized in that** the length L of the mould cavity (2) is comprised between 70 and 200 mm, the width B between 60 and 180 mm and the thickness D between 5 and 25 mm.

13. Method according to any one of the claims 1 to 12, **characterized in that** said mould cavity (2) has four right angles or corners that are rounded according to a radius of curvature which is smaller than 15 mm, preferably smaller than 10 mm, and more preferably smaller than 5 mm.

14. Method according to any one of the claims 1 to 13, **characterized in that** the pre-boiled chicken burger is frozen.

## Patentansprüche

1. Verfahren zur Herstellung eines vorgekochten Hähnchenburgers (6), in welchem Verfahren Fleischmasse (1) durch Zusammenfügen, Zerschneiden und Mischen von zumindest Hähnchenfleisch, Masthähnchenhäuten, Stärke, Wasser, und einer oder mehreren Phosphatverbindungen zubereitet wird, insbesondere mittels eines Kutters, aus welcher Fleischmasse ein roher Hähnchenburger (5) geformt wird, der in Wasser vorgekocht wird,
**dadurch gekennzeichnet, dass**
der erwähnte rohe Hähnchenburger (5) in einem Formhohlraum (2) geformt wird, welcher im Wesentlichen balkenförmig ist und welcher eine Länge L, eine Breite B und eine Dicke D hat, wobei das Verhältnis zwischen der Länge L und der Breite B im Bereich von zwischen 1.1 und 1.3 gewählt wird, sodass der hergestellte Hähnchenburger (6) im Wesentlichen rechteckig ist und ein umlaufendes Rechteck mit einer Länge L" und einer Breite B" hat, wobei das Verhältnis zwischen der erwähnten Länge L" und der erwähnten Breite B" geringer als 1.10 ist.

2. Verfahren nach Anspruch 1, **dadurch gekennzeichnet, dass** nahezu ausschließlich das erwähnte Hähnchenfleisch in der Zubereitung der erwähnten Fleischmasse verwendet wird, oder, wenn zusätzlich eine oder mehrere andere Arten von Fleisch verwendet werden, diese anderen Fleischarten in einer Menge von bis zu höchstens 50 %, bevorzugt bis zu höchstens 30 %, und mehr bevorzugt bis zu höchstens 10 % der eingesetzten Menge von Hähnchenfleisch verwendet werden, wobei bevorzugt nahezu ausschließlich Hähnchenfleisch verwendet wird.

3. Verfahren nach Anspruch 1 oder 2, **dadurch gekennzeichnet, dass** das erwähnte Hähnchenfleisch maschinell entbeintes Fleisch enthält und bevorzugt zu mindestens 50 % und mehr bevorzugt zu mindestens 75 % aus maschinell entbeintem Fleisch besteht, wobei bevorzugt nahezu ausschließlich maschinell entbeintes Fleisch als das erwähnte Hähnchenfleisch verwendet wird.

4. Verfahren nach irgendeinem der Ansprüche 1 bis 3, **dadurch gekennzeichnet, dass** der rohe Hähnchenburger gekocht wird, bis er voll erhitzt ist bis auf eine Temperatur von mindestens 70 °C, bevorzugt bis auf eine Temperatur von mindestens 75 °C.

5. Verfahren nach irgendeinem der Ansprüche 1 bis 4, **dadurch gekennzeichnet, dass** das Wasser, in dem der rohe Hähnchenburger gekocht wird, eine Temperatur hat, welche mindestens 60 °C, bevorzugt mindestens 65 °C, höher als die Temperatur des rohen Hähnchenburgers ist.

6. Verfahren nach irgendeinem der Ansprüche 1 bis 5, **dadurch gekennzeichnet, dass**, in der Zubereitung der erwähnten Fleischmasse, mindestens 7 %, bevorzugt mindestens 10 %, und am meisten bevorzugt mindestens 13 % Wasser verwendet werden, ausgedrückt als ein Prozentsatz des Gesamtgewichts der Fleischmasse.

7. Verfahren nach irgendeinem der Ansprüche 1 bis 6, **dadurch gekennzeichnet, dass**, in der Zubereitung der erwähnten Fleischmasse, mindestens 40 %, bevorzugt mindestens 50 %, und am meisten bevorzugt mindestens 55 % Hähnchenfleisch und Masthähnchenhäute verwendet werden, ausgedrückt als ein Prozentsatz des Gesamtgewichts der Fleischmasse.

8. Verfahren nach irgendeinem der Ansprüche 1 bis 7, **dadurch gekennzeichnet, dass** die erwähnten Phosphatverbindungen zugesetzt werden, um den Gehalt an Phosphaten in der Fleischmasse, ausgedrückt in Gramm P₂O₅ pro Kilogramm Fleischmasse, auf einen Wert zwischen 5 und 8 g/kg, bevorzugt zwischen 6 und 8 g/kg zu erhöhen.

9. Verfahren nach irgendeinem der Ansprüche 1 bis 8, **dadurch gekennzeichnet, dass** Weizenstärke als die erwähnte Stärke verwendet wird.

10. Verfahren nach irgendeinem der Ansprüche 1 bis 9, **dadurch gekennzeichnet, dass** ferner Paniermehl und/oder Ballaststoffe von Weizen für die Zubereitung der erwähnten Fleischmasse verwendet werden.

11. Verfahren nach irgendeinem der Ansprüche 1 bis 10, **dadurch gekennzeichnet, dass** das Verhältnis zwischen der Länge L und der Breite B des Formhohlraums (2) zwischen 1.15 und 1.25 liegt.

12. Verfahren nach irgendeinem der Ansprüche 1 bis 11, **dadurch gekennzeichnet, dass** die Länge L des Formhohlraums (2) zwischen 70 und 200 mm liegt, die Breite B zwischen 60 und 180 mm und die Dicke D zwischen 5 und 25 mm.

13. Verfahren nach irgendeinem der Ansprüche 1 bis 12, **dadurch gekennzeichnet, dass** der erwähnte Formhohlraum (2) vier rechte Winkel oder Ecken hat, die gemäß einem Krümmungsradius gerundet sind, welcher kleiner ist als 15 mm, bevorzugt kleiner als 10 mm, und mehr bevorzugt kleiner als 5 mm.

14. Verfahren nach irgendeinem der Ansprüche 1 bis 13, **dadurch gekennzeichnet, dass** der vorgekochte Hähnchenburger eingefroren wird.

## Revendications

1. Procédé pour la production d'un burger au poulet pré-bouilli (6), procédé dans lequel de la pâte de viande (1) est préparée en combinant, découpant et mélangeant au moins de la viande de poulet, des peaux de poulet de chair, de l'amidon, de l'eau et un ou plusieurs composés de phosphate, en particulier au moyen d'un élément coupant, à partir de la pâte de viande un burger au poulet cru (5) est formé, qui est pré-bouilli dans de l'eau,
**caractérisé en ce que**
ledit burger au poulet cru (5) est formé dans une cavité de moule (2) qui est essentiellement en forme de poutre et qui a une longueur L, une largeur B et une épaisseur D, dans lequel le rapport entre la longueur L et la largeur B est choisi dans une plage entre 1,1 et 1,3 de telle sorte que le burger au poulet produit (6) est essentiellement de forme carrée et a un rectangle circonférentiel ayant une longueur L" et une largeur B", le rapport entre ladite longueur L" et ladite largeur b" étant inférieur à 1,10.

2. Procédé selon la revendication 1, **caractérisé en ce que** presque exclusivement ladite viande de poulet est utilisée dans la préparation de ladite pâte de viande ou, si en plus un ou plusieurs autres types de viande sont utilisés, ces autres types de viande sont utilisés en une quantité allant jusqu'à un maximum de 50 %, de préférence jusqu'à un maximum de 30 %, et de manière plus préférentielle jusqu'à un maximum de 10 % de la quantité appliquée de viande de poulet, dans lequel de préférence presque exclusivement de la viande de poulet est utilisée.

3. Procédé selon la revendication 1 ou 2, **caractérisé en ce que** ladite viande de poulet contient de la viande séparée mécaniquement et consiste de préférence en au moins 50 % et de manière plus préférentielle en au moins 75 % de viande séparée mécaniquement, dans lequel de préférence est utilisée presque exclusivement de la viande séparée mécaniquement en tant que ladite viande de poulet.

4. Procédé selon l'une quelconque des revendications 1 à 3, **caractérisé en ce que** le burger au poulet cru est bouilli au moins jusqu'à ce qu'il soit totalement chauffé à une température d'au moins 70 °C, de préférence à une température d'au moins 75 °C.

5. Procédé selon l'une quelconque des revendications 1 à 4, **caractérisé en ce que** l'eau dans laquelle le burger au poulet cru est bouilli a une température qui est au moins de 60 °C, de préférence d'au moins 65 °C, supérieure à la température du burger au poulet cru.

6. Procédé selon l'une quelconque des revendications 1 à 5, **caractérisé en ce que**, dans la préparation de ladite pâte de viande, au moins 7 %, de préférence au moins 10 %, et de manière encore plus préférentielle au moins 13 % d'eau sont utilisés, exprimés sous la forme d'un pourcentage du poids total de la pâte de viande.

7. Procédé selon l'une quelconque des revendications 1 à 6, **caractérisé en ce que**, dans la préparation de ladite pâte de viande, au moins 40 %, de préférence au moins 50 %, et de manière encore plus préférentielle au moins 55 % de viande de poulet et de peaux de poulet de chair sont utilisés, exprimés sous forme d'un pourcentage du poids total de la pâte de viande.

8. Procédé selon l'une quelconque des revendications 1 à 7, **caractérisé en ce que** lesdits composés de phosphate sont ajoutés afin d'augmenter la teneur en phosphates dans la pâte de viande, exprimée en gramme de P₂O₅ par kilogramme de pâte de viande, à une valeur entre 5 et 8 g/kg, de préférence entre 6 et 8 g/kg.

9. Procédé selon l'une quelconque des revendications 1 à 8, **caractérisé en ce que** de l'amidon de blé est utilisé en tant que ledit amidon.

10. Procédé selon l'une quelconque des revendications 1 à 9, **caractérisé en ce que** de la chapelure et/ou des fibres de blé sont en outre utilisées pour la préparation de ladite pâte de viande.

11. Procédé selon l'une quelconque des revendications 1 à 10, **caractérisé en ce que** le rapport entre la longueur L et la largeur B de la cavité de moule (2) est compris entre 1,15 et 1,25.

12. Procédé selon l'une quelconque des revendications 1 à 11, **caractérisé en ce que** la longueur L de la cavité de moule (2) est comprise entre 70 et 200 mm, la largeur B entre 60 et 180 mm et l'épaisseur D entre 5 et 25 mm.

13. Procédé selon l'une quelconque des revendications 1 à 12, **caractérisé en ce que** ladite cavité de moule (2) a quatre coins ou angles droits qui sont arrondis selon un rayon de courbure qui est inférieur à 15 mm, de préférence inférieur à 10 mm et de manière plus préférentielle inférieur à 5 mm.

14. Procédé selon l'une quelconque des revendications 1 à 13, **caractérisé en ce que** le burger au poulet pré-bouilli est congelé.
